Europäisches Patentamt

European Patent Office

Office européen des brevets

(11) Veröffentlichungsnummer: **0 254 001**
**B1**

(12) # EUROPÄISCHE PATENTSCHRIFT

(45) Veröffentlichungstag der Patentschrift:
16.08.90

(51) Int. Cl.⁵: **A61C 17/02**

(21) Anmeldenummer: 87108165.9

(22) Anmeldetag: 05.06.87

(54) **Abdeckvorrichtung für den Wasserbehälter einer Munddusche.**

(30) Priorität: 25.07.86 DE 3625166

(43) Veröffentlichungstag der Anmeldung:
27.01.88 Patentblatt 88/4

(45) Bekanntmachung des Hinweises auf die Patenterteilung:
16.08.90 Patentblatt 90/33

(84) Benannte Vertragsstaaten:
AT BE CH DE ES FR GB GR IT LI LU NL SE

(56) Entgegenhaltungen:
CH-A- 618 135
DE-A- 2 653 494
DE-A- 3 325 691

(73) Patentinhaber: Blendax GmbH, Rheinallee 88,
D-6500 Mainz 1(DE)

(72) Erfinder: Horntrich, Günter, Mühlstrasse 7a,
D-7530 Pforzheim-Brötzingen(DE)

ACTORUM AG

## Beschreibung

Die vorliegende Erfindung geht aus von einer Abdeckvorrichtung für den Wasserbehälter einer Munddusche. Eine solche Vorrichtung ist in der DE-A 2 653 494 beschrieben.

Das Flüssigkeitsreservoir von Mundduschen ist entweder stationär oder beweglich angeordnet.

Die stationäre Anordnung weist den gravierenden Nachteil auf, daß zum Nachfüllen des Behälters die gesamte Munddusche zu einer Wasserquelle hinbewegt werden muß. Deshalb wird in der Regel beweglich angeordneten Flüssigkeitsbehältern der Vorrang gegeben.

Diese Flüssigkeitsbehälter sind zumeist mit einem abnehmbaren Deckel versehen, um die Verunreinigung des zur Mundspülung vorgesehenen Wassers zu verhindern.

Da das Abnehmen und Aufsetzen eines solchen losen Deckels Nachteile mit sich bringt, insbesondere eine umständliche Handhabung, sind auch bereits permanent auf dem Flüssigkeitsbehälter verbleibende Abdeckvorrichtungen bekannt geworden, die Durchbrechungen aufweisen, durch die ein Nachfüllen des Spülwassers erfolgen kann.

Derartige durchbrochene Abdeckvorrichtungen weisen jedoch den Nachteil auf, daß ebenfalls, insbesondere während des Ruhezustands der Munddusche, Verunreinigungen in das Wasserreservoir gelangen können.

Der vorliegenden Erfindung liegt, ausgehend von dem eingangs genannten Stand der Technik, die Aufgabenstellung zugrunde, eine Abdeckvorrichtung für einen Wasserbehälter von Mundduschen zu schaffen, die eine einfache Handhabung gestattet, jedoch gleichzeitig eine vollständige Abdeckung gewährleistet.

Die Lösung dieser Aufgabe besteht darin, eine ortsfest angelenkte Abdeckvorrichtung für einen entfernbar angeordneten Wasserbehälter einer Munddusche so anzuordnen, daß sie folgende Merkmale aufweist:

1. Sie besteht aus zwei beweglich miteinander verbundenen Teilen, nämlich einem einen vorderen und einen hinteren Teil aufweisenden Deckel und einem waagerechten ortsfesten Trägerteil;

2. der Deckel ist etwa in seiner Mitte um eine Querachse klappbar durch eine Scharniervorrichtung an dem waagerechten Trägerteil, der an einem senkrecht angeordneten, mit dem Sockel der Munddusche verbundenen Halteteil befestigt ist, gehalten;

3. der hintere Teil des Deckels ist materialverstärkt und liegt im Ruhezustand auf dem Rand des Wasserbehälters auf;

4. beim Entfernen des Wasserbehälters klappt der vordere Teil des Deckels nach oben.

Durch diese Merkmalskombination ist es möglich, den Wasserbehälter mühelos zu entnehmen, wobei der vordere Teil der Abdeckvorrichtung nach oben klappt und in einem Winkel von etwa 15 bis 40° stehenbleibt, im Zusammenwirken mit dem hinteren, materialverstärkten Teil, der dann nicht mehr auf der Kante des Wasserbehälters aufliegen kann und deshalb nach unten klappt.

Beim Einschieben des Wasserbehälters gleitet dessen Kante an der unteren Fläche des Deckels entlang und drückt den Deckel in die waagerechte Position zurück.

Vorzugsweise ist am hinteren, materialverstärkten Teil der Abdeckvorrichtung ein Abstandhalter zwischen dieser und dem Wasserbehälter angeordnet, der auf der Kante des Wasserbehälters aufliegt und dadurch einen Spalt zwischen Behälter und Deckel entstehen läßt.

Durch diese Ausgestaltung der Abdeckvorrichtung wird ein wesentlicher Fortschritt gegenüber den bekannten Abdeckvorrichtungen erzielt.

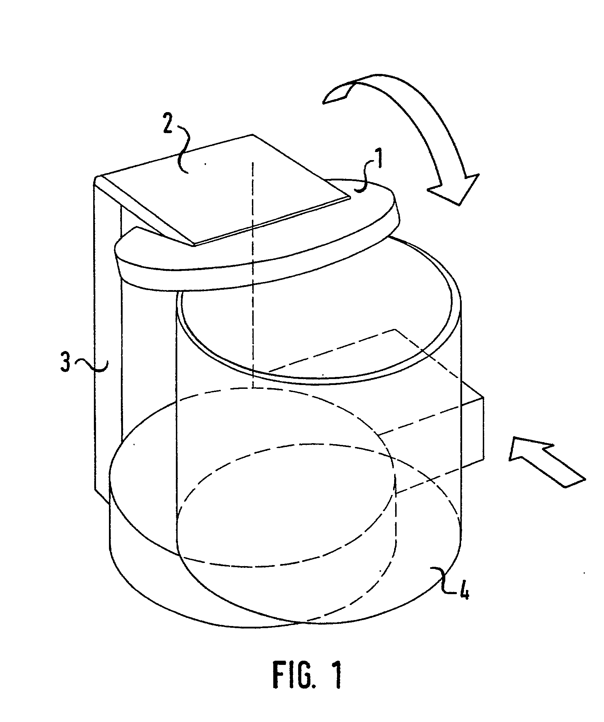

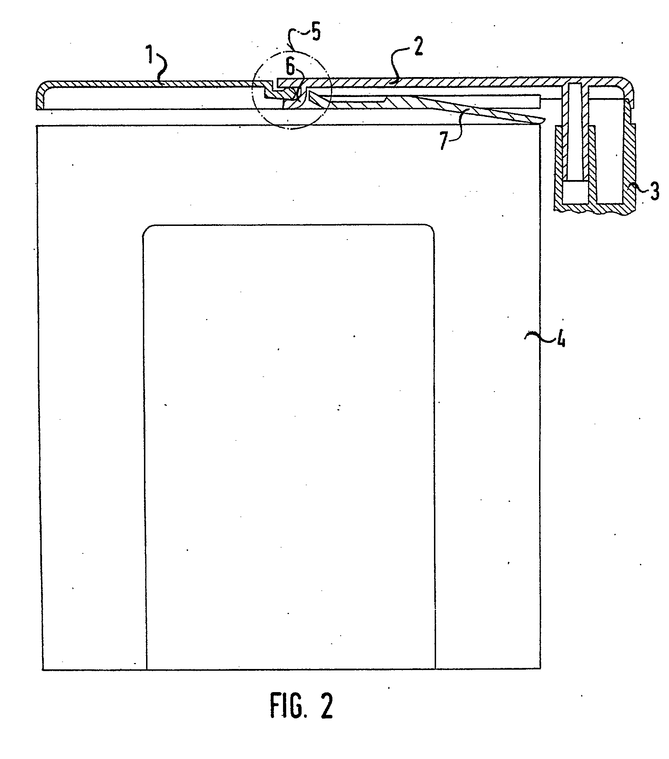

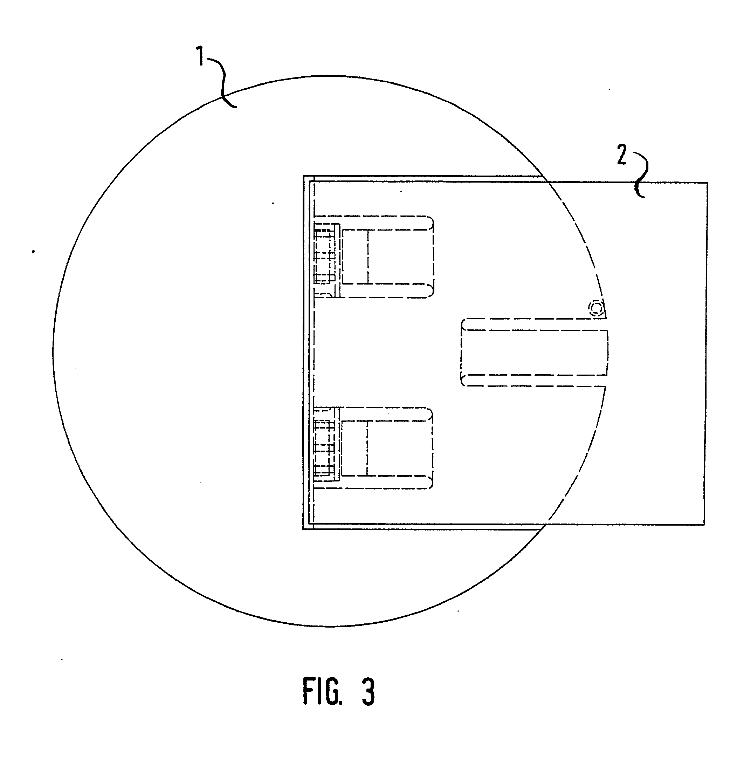

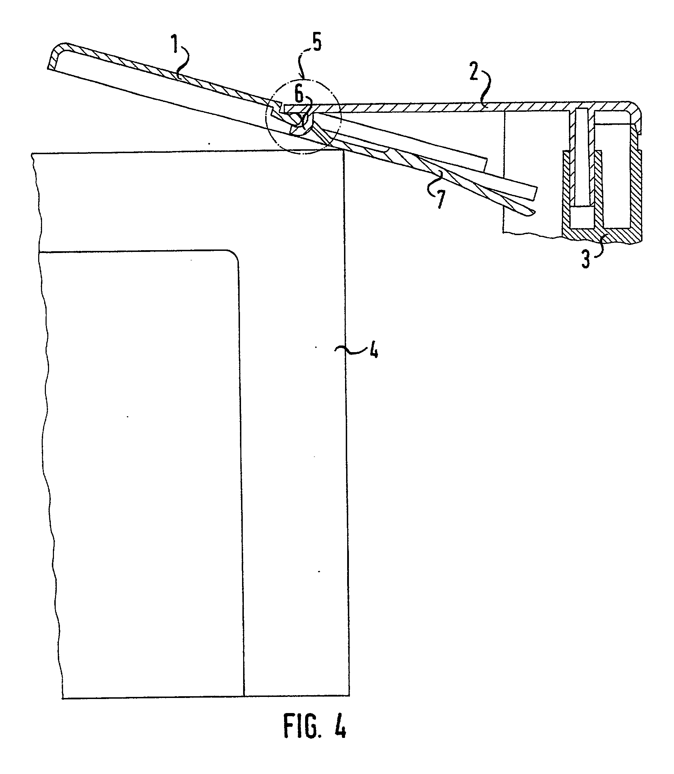

In den Fig. 1 bis 4 werden beispielhafte Ausführungsformen der erfindungsgemäßen Abdeckvorrichtung wiedergegeben.

Dabei stellt

Fig. 1 eine Draufsicht auf eine Ausführungsform einer mit der erfindungsgemäßen Abdeckvorrichtung ausgestattete Munddusche während des Entnehmens bzw. Einschieben des Behälters dar;

Fig. 2 ist ein perspektivischer Schnitt durch den Behälter mit Abdeckvorrichtung in geschlossenem Zustand;

Fig. 3 zeigt die Schnappvorrichtung entsprechend dem Kreis aus Fig. 2 in Draufsicht im Detail, und

Fig. 4 ist ein perspektivischer Schnitt der Abdeckvorrichtung im geöffneten Zustand bei entnommenem Wasserbehälter.

Die Bezugszeichen haben dabei die im Patentanspruch angegebene Bedeutung.

## Patentansprüche

Ortsfest angelenkte Abdeckvorrichtung für den entfernbar angeordneten Wasserbehälter einer Munddusche, gekennzeichnet durch die Kombination der folgenden Merkmale:

a) Sie besteht aus zwei beweglich miteinander verbundenen Teilen, nämlich einem einen vorderen (1) und einen hinteren Teil (7) aufweisenden Deckel und einem waagerechten ortsfesten Trägerteil (2);

b) der Deckel ist etwa in seiner Mitte um eine Querachse klappbar durch eine Scharniervorrichtung (6) an dem waagerechten Trägerteil (2), der an einem senkrecht angeordneten, mit dem Sockel der Munddusche verbundenen Halteteil (3) befestigt ist, gehalten;

c) der hintere Teil (7) des Deckels ist materialverstärkt und liegt im Ruhezustand auf dem Rand des Wasserbehälters (4) auf;

d) beim Entfernen des Wasserbehälters (4) klappt der vordere Teil (1) des Deckels nach oben.

## Claims

Covering device, hinged in a fixed manner, for the detachably arranged water container of a mouth-rinsing device, characterized by the combination of the following features:

a) it consists of two parts connected to each other in a movable way, namely of a lid having a front part (1) and a back part (7) and of a horizontal, fixed supporting part (2);

b) the lid is retained approximately in its centre so that it can be tilted about a transverse axis by a hinging device (6) on the horizontal supporting part (2), which is attached to a retaining part (3) arranged vertically and connected to the base of the mouth-rinsing device;

c) the back part (7) of the lid is of reinforced material and is supported in its resting position on the edge of the water container (4);

d) upon removal of the water container (4) the front part (1) of the lid tilts upwards.

**Revendications**

Dispositif formant couvercle articulé en un point fixe pour le récipient d'eau, disposé de manière amovible, d'une douche buccale, caractérisé par la combinaison des particularités suivantes:

a) il se compose de deux parties reliées entre elles de façon mobile, à savoir un couvercle, présentant une partie avant (1) et une partie arrière (7), et une pièce de support en un point fixe horizontal (2);

b) le couvercle est maintenu à peu près en son milieu en pouvant basculer, autour d'un axe transversal, au moyen d'un dispositif à charnière (6) placé sur le support (2) qui est fixé sur une pièce de maintien (3) disposée verticalement, reliée au socle de la douche buccale;

c) la partie arrière (7) du couvercle est renforcée par un matériau et s'appuie, à l'état de repos, sur le bord du récipient d'eau (4);

d) lorsqu'on enlève le récipient d'eau (4), la partie avant du couvercle (1) bascule vers le haut.

FIG. 1

FIG. 2

FIG. 3

FIG. 4